# EUROPEAN PATENT APPLICATION

(11) **EP 4 571 677 A1**
(43) Date of publication of application: **18.06.2025**
(21) Application number: 23869657.9
(22) Date of filing: 22.05.2023
(51) Int. Cl.: G06V 20/52

(54) **OPTICAL CABLE SAG RECOGNITION METHOD AND DEVICE**

(30) Priority: 29.09.2022 CN 202211203065
(71) Applicant: Huawei Technologies Co., Ltd., Shenzhen, Guangdong 518129 (CN)
(72) Inventor: LIU, Xiaochun, Shenzhen, Guangdong 518129 (CN); LUO, Qingyun, Shenzhen, Guangdong 518129 (CN); XIE, Borun, Shenzhen, Guangdong 518129 (CN); ZHAO, Kaidi, Shenzhen, Guangdong 518129 (CN); LI, Ke, Shenzhen, Guangdong 518129 (CN)
(74) Representative: Pfenning, Meinig & Partner mbB
(86) International application number: PCT/CN2023/095467
(87) International publication number: WO 2024/066404

(57) **Abstract**

Embodiments of this application provide an optical cable sag identification method. The method includes: obtaining optical power data, where the optical power data is performance data of an optical module in a first collection periodicity, and the optical module is connected to an optical cable; and determining, based on the optical power data, whether optical cable sag occurs in the optical cable. In this way, whether optical cable sag occurs in an optical cable connected to the optical module is determined based on analysis of performance data of the original optical module without additionally adding various high-precision devices to additionally collect data such as images and pressure data. This provides reliable guidance about sites in which optical cable sag occurs with low costs for maintenance personnel, thereby effectively avoiding optical cable faults and optical cable accidents caused by optical cable sag.

## Description

This application claims priority to Chinese Patent Application No. 202211203065.7, filed with the China National Intellectual Property Administration on September 29, 2022 and entitled "OPTICAL CABLE SAG IDENTIFICATION METHOD AND APPARATUS", which is incorporated herein by reference in its entirety.

### TECHNICAL FIELD

Embodiments of this application relate to the optical cable field, and more specifically, to an optical cable sag identification method and apparatus.

### BACKGROUND

As a transmission device used between information communication devices in a communication system, optical cables are increasingly widely used. When installing an optical cable, technical personnel needs to control a distance between the optical cable and the ground to be not less than a specified safe distance, to ensure normal operation of the optical cable. However, during daily operation for the optical cable, the optical cable gradually becomes sagged due to non-standard construction behavior, hook detachment, cracking, ice covering, or other factors. The sagged optical cable with the distance between the optical cable and the ground being less than the specified safe distance affects city appearance, brings injuries to passing pedestrians and vehicles, or even causes casualty or communication service interruption.

Currently, manual inspection or instrument measurement is mainly used to identify whether the distance between the optical cable and the ground is less than the specified safe distance. However, the foregoing methods cost high in labor and instrument, and also cost high in maintenance. Therefore, how to cost-effectively identify whether the optical cable sags is an urgent problem to be resolved.

### SUMMARY

Embodiments of this application provide an optical cable sag identification method, to identify, based on collected optical power data of an optical cable, whether the optical cable sags, and generate a warning about an optical cable sag problem in a timely manner without relying on a high-precision device, thereby reducing monitoring and maintenance costs.

According to a first aspect, an optical cable sag identification method is provided. The method includes: obtaining optical power data, where the optical power data is performance data of an optical module in a first collection periodicity, and the optical module is connected to an optical cable; and determining, based on the optical power data, whether optical cable sag occurs in the optical cable.

Based on the foregoing solution, whether optical cable sag occurs in an optical cable connected to the optical module is determined based on analysis of performance data of the original optical module without additionally adding various high-precision devices to additionally collect data such as images and pressure data. This provides reliable guidance about sites in which optical cable sag occurs with low costs for maintenance personnel, thereby effectively avoiding optical cable faults and optical cable accidents caused by optical cable sag.

With reference to the first aspect, in some implementations of the first aspect, the method further includes: obtaining an optical power data set based on the first collection periodicity, where the optical power data set includes performance data of a plurality of optical modules in at least one first collection periodicity; and determining a prediction model based on the optical power data set, where the prediction model is used to determine whether optical cable sag occurs in the optical cable.

Based on the foregoing solution, an optical cable sag identification model is trained by using the optical power data, to determine, based on the optical cable sag identification model, whether optical cable sag occurs in the optical cable. This reduces operation and maintenance costs, and also provides reliable guidance about sites in which optical cable sag occurs with low costs for maintenance personnel, thereby effectively avoiding optical cable faults and optical cable accidents caused by optical cable sag.

With reference to the first aspect, in some implementations of the first aspect, the determining, based on the optical power data, whether optical cable sag occurs in the optical cable includes: determining, based on the optical power data and the prediction model, whether optical cable sag occurs in the optical cable.

Based on the foregoing solution, the performance data (the optical power data) of the optical module can be detected in real time by using a trained optical cable sag identification model, to find in a timely manner whether optical cable sag occurs in the optical cable, thereby effectively avoiding optical cable faults and optical cable accidents caused by optical cable sag.

With reference to the first aspect, in some implementations of the first aspect, the performance data includes at least one of the following: a largest value of optical power data of the optical module in each second collection periodicity of the first collection periodicity, a smallest value of the optical power data of the optical module in each second collection periodicity, and optical power data of the optical module at a current moment.

Based on the foregoing solution, whether optical cable sag occurs in an optical cable is determined based on analysis of performance data of the original optical module without additionally adding various high-precision devices to additionally collect data such as images and pressure data. This effectively reduces operation and maintenance costs.

With reference to the first aspect, in some implementations of the first aspect, the method further includes: determining a statistical feature value set based on the optical power data set, where the statistical feature value set includes a statistical feature value of each of the plurality of optical modules in at least one collection periodicity; and the determining a prediction model based on the optical power data set includes: determining the prediction model based on the optical power data set and the statistical feature value set.

Based on the foregoing solution, whether optical cable sag occurs in an optical cable connected to the optical module is determined based on analysis of performance data of the original optical module without additionally adding various high-precision devices to additionally collect data such as images and pressure data. This provides reliable guidance about sites in which optical cable sag occurs with low costs for maintenance personnel, thereby effectively avoiding optical cable faults and optical cable accidents caused by optical cable sag.

With reference to the first aspect, in some implementations of the first aspect, the statistical feature value includes at least one of the following: a range between the largest value and the smallest value of the optical power data of the optical module in each second collection periodicity of the first collection periodicity, a coefficient of variation of all ranges of the optical module in the first collection periodicity, an average value of all the ranges of the optical module in the first collection periodicity, a largest differential value of all current values of the optical module in the first collection periodicity, a percentage of all the current values of the optical module in the first collection periodicity, and a mean value of all the current values of the optical module in the first collection periodicity. The current value is optical power data at a same moment in each second collection periodicity of the first collection periodicity, and the largest differential value, the percentage, and the mean value are obtained by performing a first-order difference on the current values.

Based on the foregoing solution, whether optical cable sag occurs in an optical cable is determined based on analysis of performance data of the original optical module without additionally adding various high-precision devices to additionally collect data such as images and pressure data. This effectively reduces operation and maintenance costs.

According to a second aspect, an optical cable sag identification apparatus is provided. The apparatus includes: an optical module, configured to obtain optical power data, where the optical power data is performance data of an optical module in a first collection periodicity, and the optical module is connected to an optical cable; and an analysis module, configured to determine, based on the optical power data, whether optical cable sag occurs in the optical cable.

With reference to the second aspect, in some implementations of the second aspect, the apparatus further includes: a collection module, configured to obtain an optical power data set based on the first collection periodicity, where the optical power data set includes performance data of a plurality of optical modules in at least one first collection periodicity. The analysis module is further configured to determine a prediction model based on the optical power data set, where the prediction model is used to determine whether optical cable sag occurs in the optical cable.

With reference to the second aspect, in some implementations of the second aspect, the analysis module is further configured to determine, based on the optical power data and the prediction model, whether optical cable sag occurs in the optical cable.

With reference to the second aspect, in some implementations of the second aspect, the performance data includes at least one of the following: a largest value of optical power data of the optical module in each second collection periodicity of the first collection periodicity, a smallest value of the optical power data of the optical module in each second collection periodicity, and optical power data of the optical module at a current moment.

With reference to the second aspect, in some implementations of the second aspect, the analysis module is further configured to determine a statistical feature value set based on the optical power data set, where the statistical feature value set includes a statistical feature value of each of the plurality of optical modules in at least one collection periodicity. The analysis module is further configured to determine the prediction model based on the optical power data set and the statistical feature value set.

With reference to the second aspect, in some implementations of the second aspect, a statistical feature value includes at least one of the following: a range between the largest value and the smallest value of the optical power data of the optical module in each second collection periodicity of the first collection periodicity, a coefficient of variation of all ranges of the optical module in the first collection periodicity, an average value of all the ranges of the optical module in the first collection periodicity, a largest differential value of all current values of the optical module in the first collection periodicity, a percentage of all the current values of the optical module in the first collection periodicity, and a mean value of all the current values of the optical module in the first collection periodicity. The current value is optical power data at a same moment in each second collection periodicity of the first collection periodicity, and the largest differential value, the percentage, and the mean value are obtained by performing a first-order difference on the current values.

For explanations of related content and beneficial effects of the apparatus provided in the second aspect, refer to the method shown in the first aspect. Details are not described herein again.

According to a third aspect, a computing device cluster is provided, and includes at least one computing device. Each computing device includes a processor and a memory. A processor of the at least one computing device is configured to execute instructions stored in a memory of the at least one computing device, to enable the computing device cluster to perform the method in any implementation of the first aspect.

According to a fourth aspect, a computer program product including instructions is provided. When the instructions are run by a computing device cluster, the computing device cluster is enabled to perform the method in any implementation of the first aspect.

According to a fifth aspect, a computer-readable storage medium is provided, and includes computer program instructions. When the computer program instructions are executed by a computing device cluster, the computing device cluster performs the method in any implementation of the first aspect.

### BRIEF DESCRIPTION OF DRAWINGS

FIG. 1 is a diagram of an application scenario applicable to an embodiment of this application;
FIG. 2 is a diagram of an architecture of an optical cable sag identification system 120 according to an embodiment of this application;
FIG. 3 is a block diagram of an analysis module 122 according to an embodiment of this application;
FIG. 4 is a schematic flowchart of an optical cable sag identification method 400 according to an embodiment of this application;
FIG. 5 is a schematic flowchart of an optical cable sag identification method 500 according to an embodiment of this application;
FIG. 6 is a diagram of an architecture of a computing device 600 according to an embodiment of this application;
FIG. 7 is a diagram of an architecture of a computing device cluster according to an embodiment of this application; and
FIG. 8 shows a connection manner in a computing device cluster according to an embodiment of this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

It should be further understood that in embodiments of this application, "first", "second", "third", "fourth", and the like are merely intended to indicate different objects, but do not represent other limitations on the indicated objects.

Because embodiments of this application relate to massive professional terms, for ease of understanding, the following first describes related terms and concepts in embodiments of this application.

### 1. Optical cable swing

Optical cable swing refers to a phenomenon that an optical cable swings due to weather factors, human activities, or other factors. For example, the optical cable swings due to bad weather such as a strong wind, or the optical cable swings due to an external force after the optical cable sags. An optical power fluctuation feature caused by optical cable swing varies with factors that cause optical cable swing.

### 2. Optical cable sag

In production environment of telecom carriers, aerial optical cables gradually become sagged due to non-standard construction behavior, hook detachment, cracking, ice covering, or other reasons. Optical cable sag is harmful, and may result in serious accidents. Optical cable sag mainly has the following adverse impact:
(1) Cause service degrading or interruption because sagged optical cables are prone to be disconnected by passing vehicles.
(2) Cause traffic accidents or threat personal and property safety if optical cable sag occurs in traffic-intensive blocks or on railways.
(3) Affect city appearance.

### 3. Optical power change

Optical power (optical power) refers to energy of light per unit time. The optical power is typically expressed milliwatt (mw) and decibel milliwatt (dBm). A relationship between the two units is as follows: 1 mw=0 dBm. Typically, a value less than 1 mw is referred to as a negative value.

It should be understood that, sagged optical cables are prone to swing due to external force, and a non-sagged optical cable and a sagged optical cable have a different swing frequency and amplitude. An optical cable swings greatly only when the optical cable sags to a specific extent. However, a sagged optical cable does not necessarily swing. The phenomenon of optical cable swing is further subject to some weather or human conditions. In addition, optical cable swing causes the optical power change, but the optical power change is not necessarily caused by optical cable swing.

In other words, optical cable sag is merely one factor that causes optical cable swing, and the optical cable swing is a factor that causes optical power change. A factor that causes optical cable swing is analyzed based on optical power data, so that an optical cable sag phenomenon can be further identified.

Currently, carriers mainly identify the optical cable sag phenomenon through manual inspection (for example, periodic inspection performed by operation and maintenance personnel or telephone complaints from the public) or instrument measurement (for example, based on an image identification technology or a vibration sensor identification technology). However, the foregoing methods cost high in labor and instrument, and also cost high in maintenance.

This application provides an optical cable sag identification method, to identify, based on collected optical power data of an optical cable, whether the optical cable sags, and generate a warning about an optical cable sag problem in a timely manner without relying on a high-precision device, thereby reducing monitoring and maintenance costs.

A product form in embodiments of this application includes but is not limited to one or more of the following:
1: chips or other hardware forms; and
2: cloud service platform or cloud service system or other system forms.

It should be noted that the foregoing product form in embodiments of this application is merely an example, and this is not limited in this application.

The optical cable sag identification method provided in embodiments of this application may be applied to a computing device. The computing device, also referred to as a computing system, includes a hardware layer, an operating system layer running above the hardware layer, and an application layer running above the operating system layer. The hardware layer includes hardware such as a processing unit, a memory, and a memory control unit. Subsequently, functions and structures of the hardware are described in detail. The operating system is any one or more types of computer operating systems that implement service processing through a process (process), for example, a Linux operating system, a Unix operating system, an Android operating system, an iOS operating system, and a Windows operating system. The application layer includes applications such as a browser, an address book, word processing software, and instant messaging software. In addition, optionally, the computing system is a handheld device such as a smartphone or a terminal device such as a personal computer. This is not particularly limited in this application, provided that the method provided in embodiments of this application can be implemented. The optical cable sag identification method provided in embodiments of this application may be performed by the computing system, or a functional module that is in the computing system and that can invoke and execute a program.

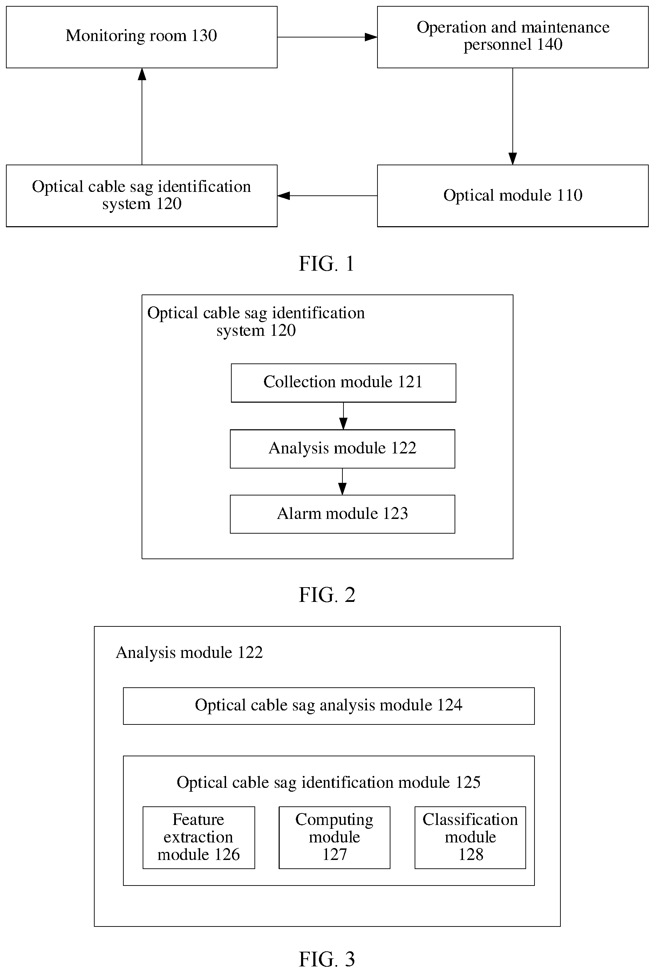

The following describes an application scenario applicable to embodiments of this application with reference to FIG. 1.

FIG. 1 is a diagram of an application scenario applicable to an embodiment of this application. As shown in FIG. 1, an application may include: an optical module 110, an optical cable sag identification system 120, a monitoring room 130, and operation and maintenance personnel 140.

The optical module 110 is connected to an optical cable, and can collect performance data (for example, optical power data) of the optical module 110. When the optical cable sag identification system 120 needs to analyze a status of the optical cable, and subscribe to the performance data of the optical module 110 connected to the optical cable, the optical module 110 reports the performance data to the optical cable sag identification system 120.

The optical cable sag identification system 120 is configured to: analyze an optical cable sag phenomenon, and report an alarm to the monitoring room 130 in a timely manner.

The optical cable sag identification system 120 includes a collection module 121, an analysis module 122, and an alarm module 123, which are specifically shown in FIG. 2.

The collection module 121 is configured to collect the performance data (for example, the optical power data) of the optical module 110.

Specifically, the collection module 121 collects the performance data of the optical module 110 through a southbound data interface.

The analysis module 122 is configured to: analyze the collected performance data of the optical module 110, and determine whether the optical cable sag phenomenon occurs in the optical cable connected to the optical module 110.

The analysis module 122 includes an optical cable sag identification module 124 and an optical cable sag analysis module 125. The optical cable sag identification module 124 further includes a feature extraction module 126, a computing module 127, and a classification module 128, which are specifically shown in FIG. 3.

The optical cable sag identification module 124 is configured to perform potential risk identification based on the collected performance data of the optical module 110, to determine a potential risk type.

The optical cable sag analysis module 125 is configured to analyze, based on the potential risk type determined by the optical cable sag identification module 124, whether the potential risk type is optical cable sag.

Specifically, the feature extraction module 126 in the optical cable sag identification module 124 performs multi-dimensional optical power waveform feature extraction on the performance data (for example, the optical power data) of the optical module 110, and further slices the optical power data based on a time sequence. Then, the computing module 127 computes a slice-level data feature, and the classification module 128 classifies multi-dimensional optical power waveform feature modes to determine the potential risk type of the optical cable connected to the optical module 110. After the potential risk type of the optical cable is determined, the optical cable sag analysis module 125 analyzes the potential risk type. When determining that the potential risk type of the optical cable is optical cable sag, the optical cable sag analysis module 125 notifies the alarm module 123.

The alarm module 123 is configured to notify the monitoring room 130 of an optical cable in which an optical cable sag phenomenon occurs, to repair the sagged optical cable.

The monitoring room 130 is configured to notify, based on a notification from the optical cable sag identification system 120, the operation and maintenance personnel 140 to repair the optical cable (for example, the optical cable connected to the optical module 110) in which the optical cable sag phenomenon occurs.

In the optical cable sag identification system 120 shown in FIG. 2, the collection module 121, the alarm module 123, and the optical cable sag analysis module 125, the feature extraction module 126, the computing module 127, and the classification module 128 in the analysis module 122 may all be implemented by using software, or may be implemented by using hardware. For example, the following describes an implementation of the analysis module 122. Similarly, for implementations of the collection module 121, the alarm module 123, and the like, refer to the implementation of the analysis module 122.

The module is used as an example of a software functional unit, and the analysis module 122 may include code running on a computing instance. The computing instance may be at least one of computing devices such as a physical host (computing device), a virtual machine, and a container. Further, there may be one or more computing devices. For example, the analysis module 122 may include code running on a plurality of hosts/virtual machines/containers. It should be noted that the plurality of hosts/virtual machines/containers configured to run the code may be distributed in a same region (region), or may be distributed in different regions. The plurality of hosts/virtual machines/containers configured to run the code may be distributed in a same AZ, or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region or cross-region communication between VPCs in different regions. Interconnection between VPCs is implemented through the communication gateway.

The module is used as an example of a hardware functional unit, and the analysis module 122 may include at least one computing device such as a server. Alternatively, the analysis module 122 may be a device implemented by using an application-specific integrated circuit (application-specific integrated circuit, ASIC), a programmable logic device (programmable logic device, PLD), or the like. The PLD may be implemented by using a complex programmable logic device (complex programmable logic device, CPLD), a field-programmable gate array (field-programmable gate array, FPGA), generic array logic (generic array logic, GAL), or any combination thereof.

A plurality of computing devices included in the analysis module 122 may be distributed in a same region, or may be distributed in different regions. A plurality of computing devices included in the optical cable sag analysis module 125 may be distributed in a same AZ, or may be distributed in different AZs. Similarly, the plurality of computing devices included in the analysis module 122 may be distributed in a same VPC, or may be distributed in a plurality of VPCs. The plurality of computing devices may be any combination of computing devices such as the server, the ASIC, the PLD, the CPLD, the FPGA, and the GAL.

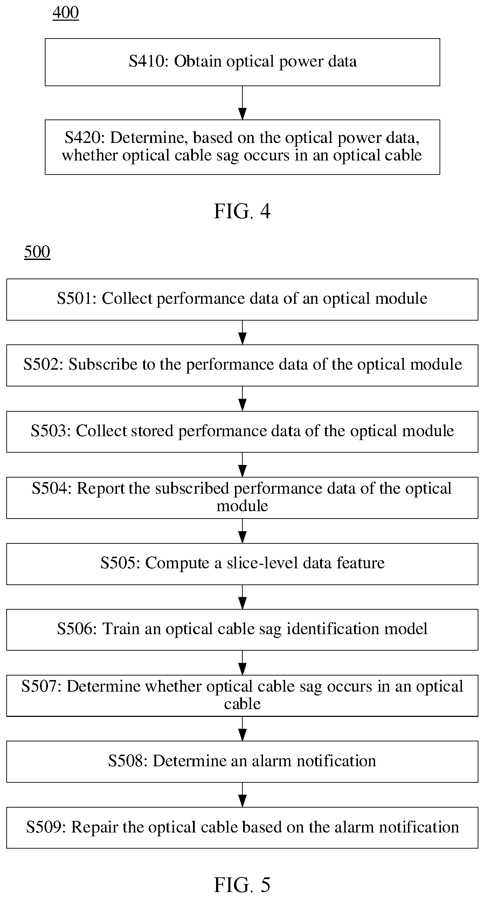

FIG. 4 is a diagram of a communication method 400 according to an embodiment of this application. The method 400 may include the following steps.

S410: Obtain optical power data.

Specifically, an optical module connected to an optical cable obtains the optical power data, where the optical power data is performance data of the optical module in a first collection periodicity.

It should be noted that the optical module collects and stores the performance data of the optical module every 1 second.

For example, the first collection periodicity is 12 minutes. In other words, the optical module obtains optical power data in 12 minutes.

The performance data of the optical module includes at least one of the following:
a largest value of optical power data of the optical module in each second collection periodicity of the first collection periodicity, a smallest value of the optical power data of the optical module in each second collection periodicity, and optical power data of the optical module at a current moment.

For example, the first collection periodicity is 12 minutes, and the second collection periodicity is 1 minute. In this case, the largest value of the optical power data of the optical module in each second collection periodicity of the first collection periodicity may be understood as a largest value of optical power data of the optical module in each minute of the 12 minutes. It should be understood that, the optical module collects optical power data every 1 second, and the largest value of the optical power data in each second collection periodicity, that is, in each minute, is a largest value of 60 pieces of optical power data, so that largest values of optical power data in the 12 minutes are determined, that is, a total of 12 pieces of optical power data are determined.

For example, the first collection periodicity is 12 minutes, and the second collection periodicity is 1 minute. In this case, the smallest value of the optical power data of the optical module in each second collection periodicity of the first collection periodicity may be understood as a smallest value of optical power data of the optical module in each minute of the 12 minutes. It should be understood that the optical module collects optical power data every 1 second, and the smallest value of the optical power data in each second collection periodicity, that is, each minute, is a smallest value of 60 pieces of optical power data, so that smallest values of the optical power data in the 12 minutes are determined, that is, a total of 12 pieces of optical power data are determined.

For example, the first collection periodicity is 12 minutes, the second collection periodicity is 1 minute, and the current moment is a 1^{st} second. In this case, the optical power data of the optical module at the current moment may be understood as optical power data at the 1^{st} second in each minute of the 12 minutes, that is, there are a total of 12 pieces of optical power data.

S420: Determine, based on the optical power data, whether optical cable sag occurs in the optical cable.

Specifically, an analysis module determines, based on the optical power data collected by the optical module, whether optical cable sag occurs.

In a possible implementation, the analysis module determines, based on the optical power data and a prediction model, whether optical cable sag occurs in the optical cable.

Specifically, the analysis module uses the optical power data collected by the optical module as input data, and performs determining based on the trained prediction model used to determine whether optical cable sag occurs in the optical cable.

Based on the foregoing solution, whether optical cable sag occurs in an optical cable is determined based on analysis of performance data of the original optical module without additionally adding various high-precision devices to additionally collect data such as images and pressure data. This reduces operation and maintenance costs, and also provides reliable guidance about sites in which optical cable sag occurs with low costs for maintenance personnel, thereby effectively avoiding optical cable faults and optical cable accidents caused by optical cable sag.

Optionally, the analysis module may further determine, based on optical power data of a plurality of collection periodicities, the prediction model used to determine whether optical cable sag occurs in the optical cable. The method 400 may further include S430 and S440.

S430: Obtain an optical power data set based on the first collection periodicity.

Specifically, the optical module obtains the optical power data set based on the first collection periodicity.

The optical power data set includes performance data of a plurality of optical modules in at least one first collection periodicity.

It should be understood that the plurality of optical modules obtain performance data of the plurality of optical modules in a plurality of first collection periodicities.

For example, the first collection periodicity is 12 minutes, and each of 20 different optical modules collects performance data of the optical module in 100 slices (that is, 1200 minutes) by using the 12 minutes as one slice. In other words, in this case, the optical power data set is performance data of the 20 different optical modules in a total of 400 hours.

For the performance data of the optical module, refer to the descriptions in S410. Herein, to avoid repetition, detailed descriptions thereof are omitted.

S440: Determine the prediction model based on the optical power data set.

The prediction model is used to determine whether optical cable sag occurs in the optical cable.

In a possible implementation, after obtaining the optical power data set, the analysis module trains the prediction model by using the optical power data set.

For example, for the performance data in the 400 hours in the optical power data set, performance data in 60% of the hours (that is, 240 hours) is used as training data, and performance data in 40% of the hours (that is, 160 hours) is used as test data to train the prediction model.

In a possible implementation, after obtaining the optical power data set, the analysis module determines a statistical feature value set based on the optical power data set, and trains the prediction model by using the optical power data set and the statistical feature value set.

For example, for the performance data in the 400 hours in the optical power data set and a statistical feature value, performance data in 60% of the hours (that is, 240 hours) and the statistical feature value are used as training data, and performance data in 40% of the hours (that is, 160 hours) and the statistical feature value are used as test data to train the prediction model.

The statistical feature value set includes a statistical feature value of each of the plurality of optical modules in at least one collection periodicity.

Specifically, the statistical feature value includes at least one of the following:
a range between the largest value and the smallest value of the optical power data of the optical module in each second collection periodicity of the first collection periodicity, a coefficient of variation of all ranges of the optical module in the first collection periodicity, an average value of all the ranges of the optical module in the first collection periodicity, a largest differential value of all current values of the optical module in the first collection periodicity, a percentage of all the current values of the optical module in the first collection periodicity, and a mean value of all the current values of the optical module in the first collection periodicity.

The current value is optical power data at a same moment in each second collection periodicity of the first collection periodicity, and the largest differential value, the percentage, and the mean value are obtained by performing a first-order difference on the current values.

The following uses an example in which the first collection periodicity is 12 minutes and the second collection periodicity is 1 minute to describe the statistical feature value.

For example, the range between the largest value and the smallest value of the optical power data of the optical module in each second collection periodicity of the first collection periodicity is a difference between a largest value and a smallest value of the optical power data of the optical module in each minute of 12 minutes. It should be understood that the optical module collects optical power data every 1 second, and the difference between the largest value and the smallest value of the optical power data in each second collection periodicity, that is, in each minute, is a difference between a largest value and a smallest value of 60 pieces of optical power data, so that differences between largest values and smallest values of optical power data in the 12 minutes are determined, that is, a total of 12 differences are determined.

For example, for the coefficient of variation of all the ranges of the optical module in the first collection periodicity, the coefficient of variation may also be referred to as a discrete coefficient (coefficient of variation), is a normalized measure of a probability distribution dispersion degree, and is defined as a ratio of a standard deviation to an average value. The coefficient of variation is used to measure a dispersion degree of a group of data. Specifically, more-centralized data indicates a smaller coefficient of variation, and more-dispersed data indicates a larger coefficient of variation. For example, the average value of all the ranges of the optical module in the first collection periodicity is an average value of 12 ranges in the 12 minutes.

For example, the largest differential value of all the current values of the optical module in the first collection periodicity is a largest value of absolute values in a sequence that includes a difference between two adjacent pieces of optical power data in optical power data at same moments in the 12 minutes. If the moment is a 1^{st} second, all the current values in the 12 minutes are optical power data at 1^{st} seconds in the minutes, a sequence that includes a difference between two adjacent pieces of optical power data in the 12 pieces of optical power data includes a total of 11 differences, and a largest value of absolute values of the 11 differences is the largest differential value.

For example, the percentage of all the current values of the optical module in the first collection periodicity is a percentage of a quantity of absolute values greater than a preset value in a sequence that includes an absolute value of a difference between two adjacent pieces of optical power data in optical power data at same moments in the 12 minutes. If the moment is a 1^{st} second, all the current values in the 12 minutes are optical power data at 1^{st} seconds in the minutes, a sequence that includes an absolute value of a difference between two adjacent pieces of optical power data in the 12 pieces of optical power data includes a total of 11 values, and in the 11 values, a quantity of absolute values greater than the preset value is 5. In this case, the percentage is 45%.

For example, the mean value of all the current values of the optical module in the first collection periodicity is a mean value of first a% values in a sequence that includes an absolute value of a difference between two adjacent pieces of optical power data in optical power data at same moments in the 12 minutes, where absolute values in the sequence are arranged in descending order. If the moment is a 1^{st} second, all the current values in the 12 minutes are optical power data at 1^{st} seconds in the minutes, in a sequence that includes an absolute value of a difference between two adjacent pieces of optical power data in the 12 pieces of optical power data, absolute values in the sequence are arranged in descending order, and an average value, that is, a mean value, of first a% values in the sequence is obtained through computing.

FIG. 5 is a diagram of a communication method 500 according to an embodiment of this application. The method 500 may include S501 to S509. The following separately describes S501 to S509 in detail.

S501: Collect performance data of an optical module.

Specifically, a network device periodically collects the performance data of the optical module and stores the performance data locally.

It should be noted that the network device may be an optical module connected to an optical cable, and the collected performance data of the optical module is performance data of the network device itself. It should be understood that, in the following, the performance data of the optical module, performance data of the network device, and the performance data of the network device itself may be equivalently replaced. For ease of description, the following uses an example in which the network device collects the performance data of the optical module for description.

The performance data of the optical module may include optical power data. Specifically, the optical power data may include received optical power data and transmitted optical power data of a port.

Specifically, the received optical power data refers to energy performed by the network device in unit time when receiving light. For example, the received optical power data may be strength of the received light.

The transmitted optical power data refers to energy performed by the network device in unit time when transmitting light. For example, the transmitted optical power data may be strength of the transmitted light.

It should be noted that, the received optical power data is power of data transmitted by the network device to another device by using the optical cable, and the transmitted optical power data is power of data transmitted by another device to the network device by using the optical cable. Therefore, for identifying an optical cable sag phenomenon, whether the optical cable sags is identified based on the received optical power data.

For example, the network device collects the received optical power data every 1 second, records, each minute, a largest value, a smallest value, and a current value in the collected received optical power data in first 60 seconds, and locally stores the largest value, the smallest value, and the current value that are of the received optical power data and that are recorded each minute.

It should be noted that, that the network device periodically collects the performance data of the optical module is merely an example, and a periodicity in which the network device collects the performance data of the optical module is not limited in this application.

In a possible implementation, the network device collects and stores performance data of the optical module in a first time period (for example, from 8:00 to 9:00) and a second time period (for example, from 9:00 to 10:00).

In a possible implementation, the network device collects and stores the performance data of the optical module in the first time period (for example, from 8:00 to 9:00). After the network device collects the performance data of the optical module in the second time period (for example, from 9:00 to 10:00), the locally stored performance data of the optical module in the first time period is overwritten, and the network device stores the performance data of the optical module in the second time period locally. To be specific, after collecting performance data of the optical module in a new time period, the network device overwrites originally locally stored performance data of the optical module, and stores the performance data of the optical module in the new time period locally. It should be noted that before the locally stored performance data of the optical module in the first time period is overwritten, the network device reports the locally stored performance data of the optical module in the first time period to a collection module.

It should be noted that the foregoing manner in which the network device stores the performance data of the optical module is merely an example. This is not limited in this application.

S502: Subscribe to the performance data of the optical module.

Specifically, an analysis module subscribes to the performance data of the optical module from the collection module by using Kafka.

Optionally, the analysis module periodically subscribes to performance data of the optical module in one time period from the collection module by using Kafka.

Kafka is a distributed message publishing and subscription system with a high throughput. Kafka can process all action stream data of a user on a website, for example, web page browsing, search, or another user action.

S503: Collect the stored performance data of the optical module.

Specifically, the collection module periodically collects performance data that is of the optical module and that is stored by the network device in a latest time period.

For example, the collection module collects, every 1 minute, a largest value, a smallest value, and a current value of received optical power data that is stored by the network device in latest one minute.

It should be noted that the foregoing manner in which the collection module collects the performance data that is of the optical module and that is stored by the network device is merely an example, and the manner in which the collection module collects the performance data that is of the optical module and that is stored by the network device is not limited in this application.

S504: Report the subscribed performance data of the optical module.

Specifically, the collection module periodically collects the performance data of the optical module subscribed by the analysis module, and reports, to the analysis module by using Kafka, performance data collected in each periodicity. A feature extraction module in the analysis module extracts a multi-dimensional optical power waveform feature of the performance data of the optical module.

For example, after collecting performance data of the optical cable in current 1 minute, the collection module immediately reports the performance data of the optical module in the current 1 minute to the analysis module by using Kafka.

S505: Compute a slice-level data feature.

Specifically, after the feature extraction module in the analysis module extracts the multi-dimensional optical power waveform feature of the performance data of the optical module, a computing module in the analysis module uses the performance data of the optical module in one time period as a slice to compute the slice-level data feature.

In a possible implementation, the computing module in the analysis module computes a range of the received optical power data (to be specific, a largest value of received optical power data minus a smallest value of the received optical power data) in each minute, and uses ranges (that is, 12 ranges) of the received optical power data every 12 minutes as a slice to compute a statistical feature value of the slice.

The statistical feature value of the slice may include at least one of the following:
a range between a largest value and a smallest value of optical power data of the optical module in each minute of the 12 minutes, a coefficient of variation of all ranges of the optical module in the 12 minutes, an average value of all the ranges of the optical module in the 12 minutes, a largest differential value of all current values of the optical module in the 12 minutes, a percentage of all the current values of the optical module in the 12 minutes, and a mean value of all the current values of the optical module in the 12 minutes.

It should be noted that for descriptions of the statistical feature value of the slice, refer to the descriptions of the statistical feature value in S440. Herein, to avoid repetition, detailed descriptions thereof are omitted.

S506: Train an optical cable sag identification model.

Specifically, the analysis module uses the statistical feature value of the slice as input data to train the optical cable sag identification model.

For example, for statistical feature values of slices in 100 hours collected by the analysis module, statistical feature values of slices in 60% of the hours (that is, 60 hours) are used as training data, and statistical feature values of the slices in 40% of the hours (that is, 40 hours) are used as test data to train the optical cable sag identification model.

It should be noted that, in a process of training the optical cable sag identification model, accuracy of the model may be improved through labeling.

For example, a scenario in which a sagged optical cable is blown left and right by a strong wind is simulated through an experiment. A status of the optical cable when the optical cable is still is recorded as 0, a status of the optical cable when the optical cable is swung is recorded as 1, and 0 and 1 are labels. A group of experiments lasts for 20 minutes.

1-10 minutes: If the optical cable is still, data collected in the 10 minutes is labeled as 0.

11-12 minutes: If the optical cable swings due to blowing of a wind, data collected in the two minutes is labeled as 1.

13-20 minutes: If the optical cable is still, data collected in the eight minutes is labeled as 0.

Further, model training is performed when a result label is known.

It should be noted that the optical cable sag identification model is a dynamic model, and may be continuously trained and optimized with continuously collected performance data of the optical module.

It should be noted that S501 to S506 may be understood as a training phase of the optical cable sag identification model.

S507: Determine whether optical cable sag occurs in the optical cable.

Specifically, after an optical cable sag identification system performs S503 to S506, the analysis module obtains a slice-level data feature of a current optical module through computing. A classification module 128 in the analysis module uses the slice-level data feature of the current optical cable as input data, and determines a potential risk type by using the optical cable sag identification model trained in S506. The optical cable sag analysis module analyzes the potential risk type, and determines that optical cable sag occurs in an optical cable connected to the optical module when the potential risk type is optical cable sag.

For example, the potential risk type may be optical cable sag.

S508: Determine an alarm notification.

Specifically, after it is determined that optical cable sag occurs in the optical cable connected to the optical module, an alarm module in the optical cable sag identification system determines the alarm notification.

S509: Repair the optical cable based on the alarm notification.

Specifically, after determining the alarm notification, the alarm module in the optical cable sag identification system sends the alarm notification to a monitoring room, and the monitoring room indicates, based on the alarm notification, operation and maintenance personnel to repair the optical cable (that is, a sagged optical cable) connected to the optical module.

Based on the foregoing solution, whether optical cable sag occurs in the optical cable is determined by the optical cable sag identification model based on analysis of performance data of the original optical module without additionally adding various high-precision devices to additionally collect data such as images and pressure data, where the optical cable sag identification model is trained by using the optical power data. In addition, the model is continuously optimized through labeling. This improves model accuracy, reduces operation and maintenance costs, and also provides reliable guidance about sites in which optical cable sag occurs with low costs for maintenance personnel, thereby effectively avoiding optical cable faults and optical cable accidents caused by optical cable sag.

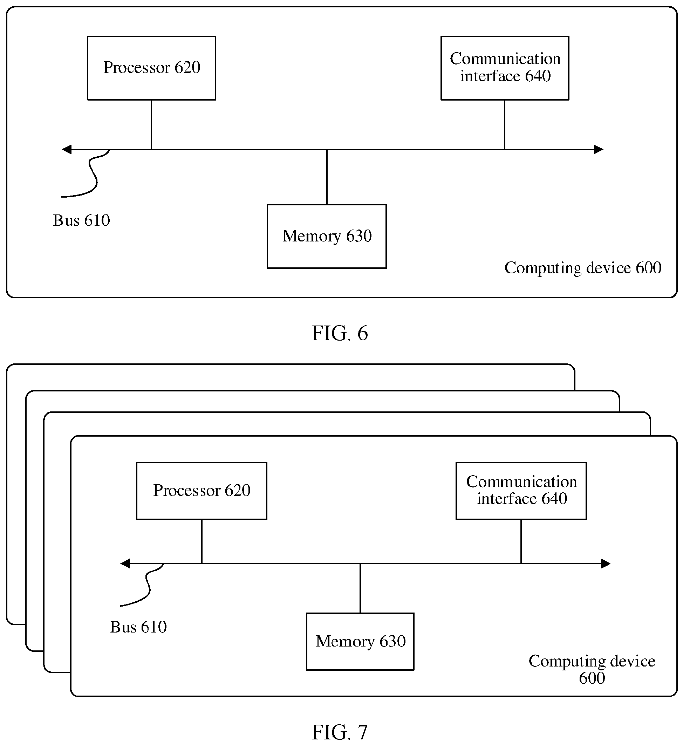

The foregoing describes in detail the optical cable sag identification method in embodiments of this application with reference to FIG. 1 to FIG. 5. This application further provides a computing device 600. The following describes in detail the computing device 600 provided in this application with reference to FIG. 6.

As shown in FIG. 6, the computing device 600 provided in this application includes a bus 610, a processor 620, a memory 630, and a communication interface 640. The processor 620, the memory 630, and the communication interface 640 communicate with each other through the bus 610. The computing device 600 may be a server or a terminal device. It should be understood that quantities of processors and memories in the computing device 600 are not limited in this application.

The bus 610 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 6, but this does not mean that there is only one bus or only one type of bus. The bus 610 may include a path for transmitting information between components (for example, the memory 630, the processor 620, and the communication interface 640) of the computing device 600.

The processor 620 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 630 may include a volatile memory (volatile memory), for example, a random access memory (random access memory, RAM). The processor 620 may further include a non-volatile memory (non-volatile memory), for example, a read-only memory (read-only memory, ROM), a flash memory, a mechanical hard disk drive (hard disk drive, HDD), or a solid state drive (solid state drive, SSD).

The memory 630 stores executable code. The processor 620 executes the executable code to separately implement functions of the foregoing collection module 121, analysis module 122, alarm module 123, optical cable sag identification module 124, optical cable sag analysis module 125, feature extraction module 126, computing module 127, and classification module 128, to implement an optical cable sag identification method. In other words, the memory 630 stores instructions used to perform the optical cable sag identification method.

The communication interface 640 uses a transceiver module, for example, but not limited to, a network interface card or a transceiver, to implement communication between the computing device 600 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

As shown in FIG. 7, the computing device cluster includes at least one computing device 600. A memory 630 in one or more computing devices 600 in the computing device cluster may store same instructions used to perform an optical cable sag identification method.

In some possible implementations, the memory 630 in the one or more computing devices 600 in the computing device cluster may alternatively separately store some instructions used to perform the optical cable sag identification method. In other words, a combination of the one or more computing devices 600 may jointly execute the instructions used to perform the optical cable sag identification method.

It should be noted that memories 630 in different computing devices 600 in the computing device cluster may store different instructions, to separately perform some functions of an optical cable sag identification system 120. In other words, instructions stored in the memories 630 in the different computing devices 600 may implement functions of one or more modules of a collection module 121, an analysis module 122, an alarm module 123, an optical cable sag identification module 124, an optical cable sag analysis module 125, a feature extraction module 126, a computing module 127, and a classification module 128.

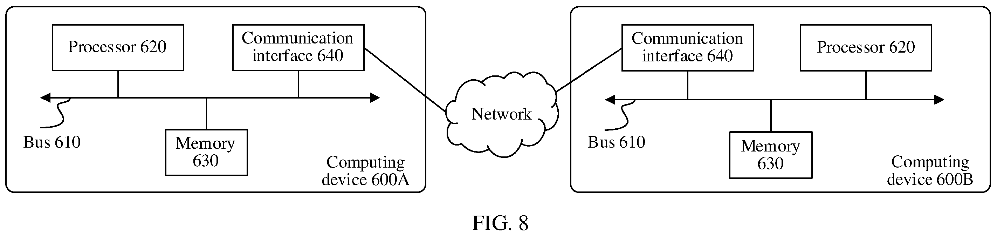

In some possible implementations, the one or more computing devices in the computing device cluster may be connected through a network. The network may be a wide area network, a local area network, or the like. FIG. 8 shows a possible implementation. As shown in FIG. 8, two computing devices 600A and 600B are connected through a network. Specifically, the computing devices are connected to the network through communication interfaces in the computing devices. In this possible implementation, a memory 630 in the computing device 600A stores instructions for functions of the collection module 121 and the alarm module 123. In addition, a memory 630 in the computing device 600B stores instructions for functions of the analysis module 122, the optical cable sag identification module 124, the optical cable sag analysis module 125, the feature extraction module 126, the computing module 127, and the classification module 128.

A connection manner in the computing device cluster shown in FIG. 8 may be that a large amount of data needs to be buffered in the optical cable sag identification method provided in this application, and a large quantity of memories is occupied. In addition, because large-capacity content costs are high, a memory capacity configured for the computing device is usually small. Therefore, it is considered that functions implemented by the analysis module 122, the optical cable sag identification module 124, the optical cable sag analysis module 125, the feature extraction module 126, the computing module 127, and the classification module 128 are performed by the computing device 600B.

It should be understood that a function of the computing device 600A shown in FIG. 8 may alternatively be completed by a plurality of computing devices 600. Similarly, a function of the computing device 600B may alternatively be completed by a plurality of computing devices 600.

An embodiment of this application further provides another computing device cluster. For a connection relationship between computing devices in the computing device cluster, refer to the connection manners in the computing device cluster in FIG. 7 and FIG. 8 similarly. A difference lies in that a memory 630 in one or more computing devices 600 in the computing device cluster may store same instructions used to perform an optical cable sag identification method.

In some possible implementations, the memory 630 in the one or more computing devices 600 in the computing device cluster may alternatively separately store some instructions used to perform the optical cable sag identification method. In other words, a combination of the one or more computing devices 600 may jointly execute the instructions used to perform the optical cable sag identification method.

It should be noted that memories 630 in different computing devices 600 in the computing device cluster may store different instructions, to perform some functions of the optical cable sag identification method. In other words, the instructions stored in the memories 630 in the different computing devices 600 may implement functions of one or more apparatuses of a collection module 121, an analysis module 122, an alarm module 123, an optical cable sag identification module 124, an optical cable sag analysis module 125, a feature extraction module 126, a computing module 127, and a classification module 128.

An embodiment of this application further provides a computer program product including instructions. The computer program product may be software or a program product that includes instructions and that can run on a computing device or be stored in any usable medium. When the computer program product runs on at least one computing device, the at least one computing device is enabled to perform an optical cable sag identification method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid state drive), or the like. The computer-readable storage medium includes instructions, and the instructions instruct the computing device to perform an optical cable sag identification method.

The term "and/or" in this specification describes only an association relationship for describing associated objects and represents that three relationships may exist. For example, A and/or B may represent the following three cases: Only A exists, both A and B exist, and only B exists, where A and B each may be in a singular or plural form. In addition, the character "/" in this specification usually represents an "or" relationship between the associated objects, but may also represent an "and/or" relationship. For details, refer to the context for understanding.

"A plurality of" in this application refers to two or more than two. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

Sequence numbers of the foregoing processes do not mean execution sequences in various embodiments of this application. The execution sequences of the processes should be determined based on functions and internal logic of the processes, and should not be construed as any limitation on the implementation processes of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computing device (which may be a personal computer, a server, a network device, or the like) to perform all or some of the steps of the methods described in embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing embodiments are merely intended for describing the technical solutions of this application other than limiting this application. Although this application is described in detail with reference to the foregoing embodiments, a person of ordinary skill in the art should understand that modifications may still be made to the technical solutions described in the foregoing embodiments or equivalent replacements may still be made to some technical features thereof, without departing from the scope of the technical solutions of embodiments of this application.

## Claims

1. An optical cable sag identification method, comprising:
obtaining optical power data, wherein the optical power data is performance data of an optical module in a first collection periodicity, and the optical module is connected to an optical cable; and
determining, based on the optical power data, whether optical cable sag occurs in the optical cable.

2. The method according to claim 1, wherein the method further comprises:
obtaining an optical power data set based on the first collection periodicity, wherein the optical power data set comprises performance data of a plurality of optical modules in at least one first collection periodicity; and
determining a prediction model based on the optical power data set, wherein the prediction model is used to determine whether optical cable sag occurs in the optical cable.

3. The method according to claim 2, wherein the determining, based on the optical power data, whether optical cable sag occurs in the optical cable comprises:
determining, based on the optical power data and the prediction model, whether optical cable sag occurs in the optical cable.

4. The method according to any one of claims 1 to 3, wherein the performance data comprises at least one of the following:
a largest value of optical power data of the optical module in each second collection periodicity of the first collection periodicity, a smallest value of the optical power data of the optical module in each second collection periodicity, and optical power data of the optical module at a current moment.

5. The method according to claim 2 or 3, wherein the method further comprises:
determining a statistical feature value set based on the optical power data set, wherein the statistical feature value set comprises a statistical feature value of each of the plurality of optical modules in at least one collection periodicity; and
the determining a prediction model based on the optical power data set comprises:
determining the prediction model based on the optical power data set and the statistical feature value set.

6. The method according to claim 5, wherein the statistical feature value comprises at least one of the following:
a range between the largest value and the smallest value of the optical power data of the optical module in each second collection periodicity of the first collection periodicity, a coefficient of variation of all ranges of the optical module in the first collection periodicity, an average value of all the ranges of the optical module in the first collection periodicity, a largest differential value of all current values of the optical module in the first collection periodicity, a percentage of all the current values of the optical module in the first collection periodicity, and a mean value of all the current values of the optical module in the first collection periodicity, wherein
the current value is optical power data at a same moment in each second collection periodicity of the first collection periodicity, and the largest differential value, the percentage, and the mean value are obtained by performing a first-order difference on the current values.

7. An optical cable sag identification apparatus, comprising:
an optical module, configured to obtain optical power data, wherein the optical power data is performance data of an optical module in a first collection periodicity, and the optical module is connected to an optical cable; and
an analysis module, configured to determine, based on the optical power data, whether optical cable sag occurs in the optical cable.

8. The apparatus according to claim 7, wherein the apparatus further comprises:
a collection module, configured to obtain an optical power data set based on the first collection periodicity, wherein the optical power data set comprises performance data of a plurality of optical modules in at least one first collection periodicity, wherein
the analysis module is further configured to determine a prediction model based on the optical power data set, wherein the prediction model is used to determine whether optical cable sag occurs in the optical cable.

9. The apparatus according to claim 8, wherein the analysis module is further configured to determine, based on the optical power data and the prediction model, whether optical cable sag occurs in the optical cable.

10. The apparatus according to any one of claims 7 to 9, wherein the performance data comprises at least one of the following:
a largest value of optical power data of the optical module in each second collection periodicity of the first collection periodicity, a smallest value of the optical power data of the optical module in each second collection periodicity, and optical power data of the optical module at a current moment.

11. The apparatus according to claim 8 or 9, wherein
the analysis module is further configured to determine a statistical feature value set based on the optical power data set, wherein the statistical feature value set comprises a statistical feature value of each of the plurality of optical modules in at least one collection periodicity; and
the analysis module is further configured to determine the prediction model based on the optical power data set and the statistical feature value set.

12. The apparatus according to claim 10, wherein the statistical feature value comprises at least one of the following:
a range between the largest value and the smallest value of the optical power data of the optical module in each second collection periodicity of the first collection periodicity, a coefficient of variation of all ranges of the optical module in the first collection periodicity, an average value of all the ranges of the optical module in the first collection periodicity, a largest differential value of all current values of the optical module in the first collection periodicity, a percentage of all the current values of the optical module in the first collection periodicity, and a mean value of all the current values of the optical module in the first collection periodicity, wherein
the current value is optical power data at a same moment in each second collection periodicity of the first collection periodicity, and the largest differential value, the percentage, and the mean value are obtained by performing a first-order difference on the current values.

13. A computing device cluster, comprising at least one computing device, wherein each computing device comprises a processor and a memory; and
a processor of the at least one computing device is configured to execute instructions stored in a memory of the at least one computing device, to enable the computing device cluster to perform the method according to any one of claims 1 to 6.

14. A computer program product comprising instructions, wherein when the instructions are run by a computing device cluster, the computing device cluster is enabled to perform the method according to any one of claims 1 to 6.

15. A computer-readable storage medium, comprising computer program instructions, wherein when the computer program instructions are executed by a computing device cluster, the computing device cluster performs the method according to any one of claims 1 to 6.
